# EUROPEAN PATENT APPLICATION

(11) **EP 1 328 117 A2**
(43) Date of publication of application: **16.07.2003**
(21) Application number: 03250080.3
(22) Date of filing: 07.01.2003
(51) Int. Cl.: H04N 5/445

(54) **Television apparatus with programme information search function**

(30) Priority: 09.01.2002 KR 2002001193
(71) Applicant: SAMSUNG ELECTRONICS CO., LTD., Suwon-City, Kyungki-do (KR)
(72) Inventor: Kim, Kyung-ah, Dongjak-gu, Seoul (KR)
(74) Representative: Geary, Stuart Lloyd

(57) **Abstract**

A method and apparatus for simply and easily searching for information relating to a broadcast programme desired by a user by providing keywords corresponding to proper information included in detailed information relating to received broadcast programmes. In this method, if detailed information relating to the broadcast programmes is received, at least one keyword for each of the broadcast programmes is detected from the received detailed information relating to the broadcast programmes. Then, a broadcast programme desired by a user is searched using the detected keywords. Accordingly, since a user has only to select a keyword in order to search for information relating to the desired broadcast programme, an information search becomes simplified. In addition, since the user uses keywords that are provided by a system, the user does not need to know or determine a proper keyword in advance.

## Description

The present invention relates to a television receiving apparatus for receiving a television signal including programme information, the apparatus comprising first memory means for storing received programme information, user input means and processing means for performing keyword searches of the programme information stored in the first memory means in dependence on operation of the user input means.

Some terrestrial receiving systems can receive and store electronic programmeme guides (EPG) which are regularly transmitted by a broadcasting station. EPGs include the titles, channel numbers, times and detailed descriptions of or contents of the broadcast programmemes. Accordingly, the ground wave receiving system allows a user to search for detailed information regarding receivable broadcasting programmes from the stored EPG information.

Text and category search modes have been proposed for searching through broadcast programme information.

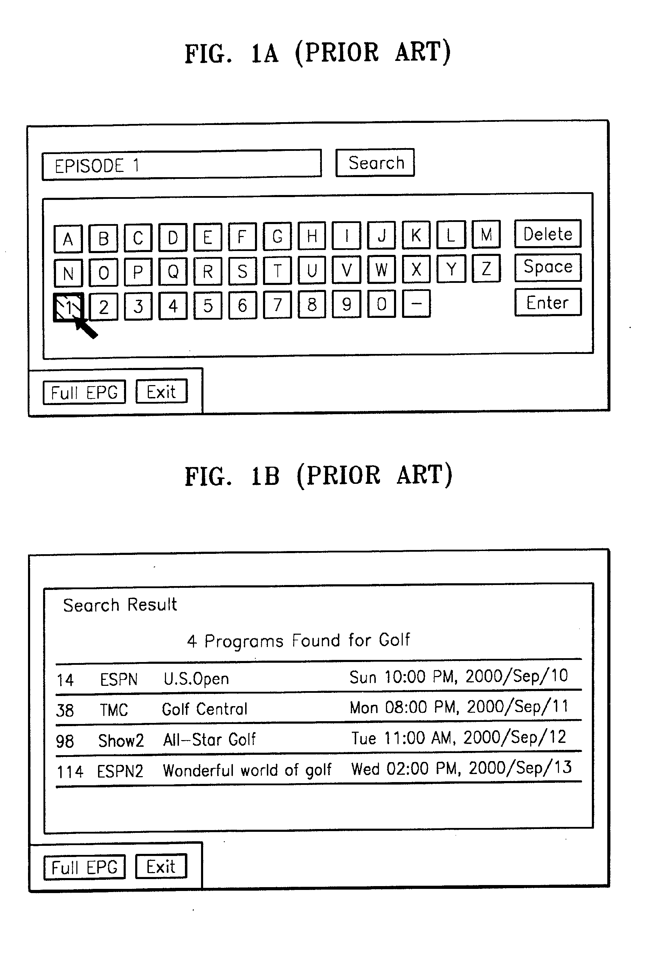

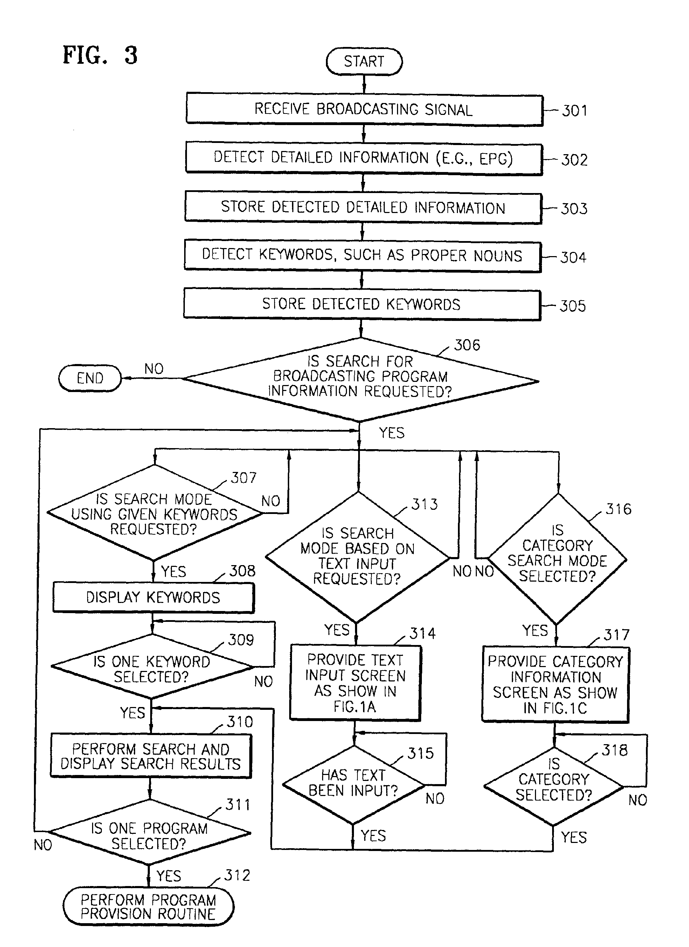

In the text search mode, a user inputs a keyword (or keywords) using a wireless keyboard that can communicate with the receiving system. Alternatively, as shown in Figure 1A, a virtual keyboard is displayed by receiving system and a desired keyword is "typed" by selecting keys of the virtual keyboard using the receiving system's remote controller. Thereafter, a search key is pushed or clicked to start the search through the stored EPG information. The search result is displayed in the format shown in Figure 1B.

However, in the above-described text search mode, it takes an undesirably long time for a user, unfamiliar with keyboards or using a remote control and a virtual keyboard, to input a keyword. Also, to use the above-described text search mode effectively, a user must previously be aware of the keyword associated with a programme desired to be found. Hence, when a user neither knows nor can determine an appropriate keyword associated with a programme to be located, the many searches using arbitrary keywords could be necessary.

In addition, when the above-described text search mode is adopted, no information relating to a broadcast programme, associated with the input keyword may be found. In other words, when information associated with the input keyword does not exist within stored EPG information, the search result that no appropriate information has been found is output.

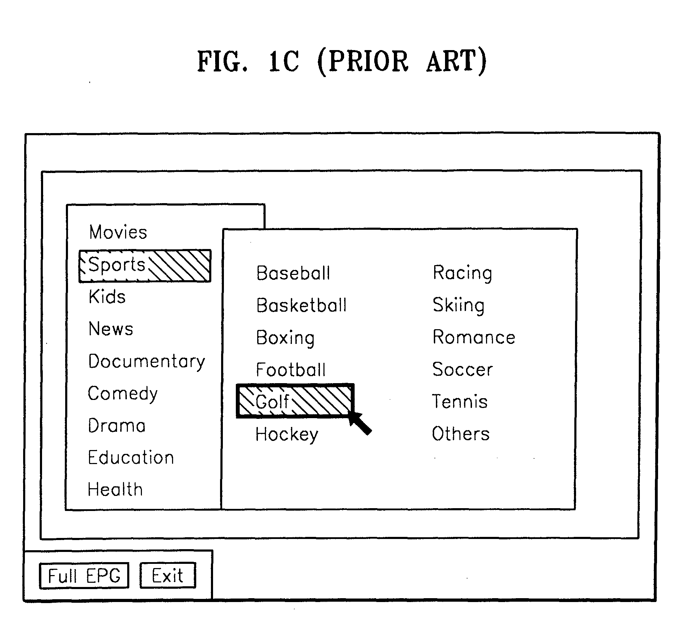

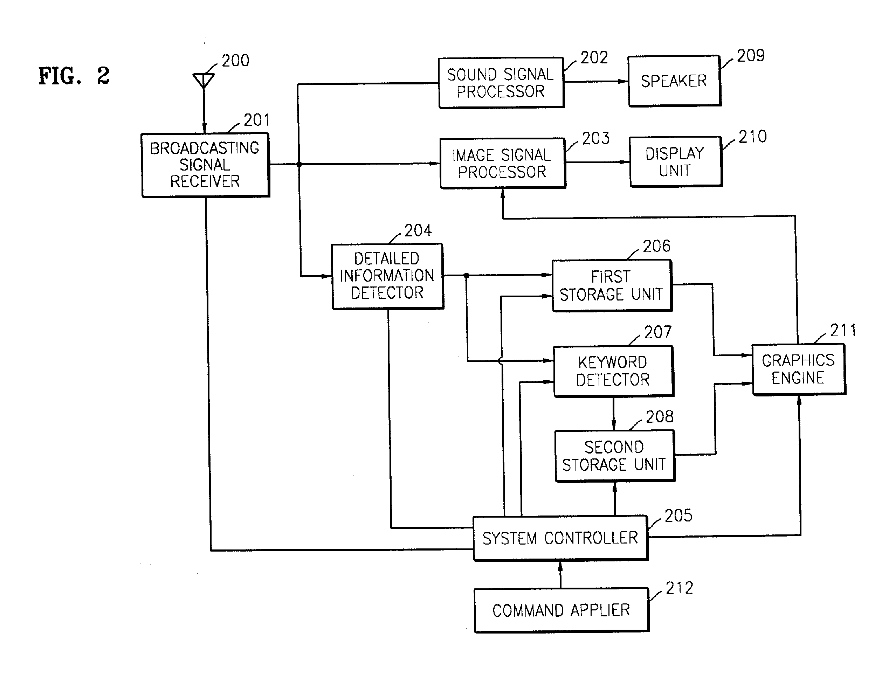

On the other hand, the category search mode is implemented as shown in Figure 1C. That is, as shown in Figure 1C, when a category "sports" is selected from among a plurality of categories, a sub-screen corresponding to the selected category is displayed. Then, when the item "golf" is selected from among the items in the displayed sub-screen, information regarding golf-related broadcast programmes is retrieved from the stored EPG information. The search result is again displayed as shown in Figure 1B.

However, in order for the category search mode to be effective, a user must also be aware of the category to which a sought programme belongs. Hence, when the user neither knows nor can determine an appropriate category associated with a programme to be located, the user must repeatedly select different categories in the hope that the correct category will be come upon.

In addition, since the categories are pre-determined on the basis of the predictions of the programmes to be broadcast, information associating a programme with a selected category item may not exist within the stored EPG information.

An apparatus according to the present invention is characterised by second memory means, keyword extraction means for extracting keywords from received programme information and storing the extracted keywords in the second memory means and the processing means being responsive to operation of the user input means to cause keywords stored in the second memory means to be displayed and responsive to further operation of the user input means, in respect of displayed keywords, to conduct a search of the programme information stored in the first memory means in dependence on a displayed keyword selected by said further operation of the user input means.

The first and second memory means may be parts, preferably different, of the same memory.

Preferred and optional features of the present invention are set forth in claims 2 to 14 appended hereto.

An embodiment of the present invention will now be described, by way of example, with reference to Figures 2 to 4B of the accompanying drawings, in which:
Figures 1A through 1C show screens illustrating conventional methods of searching broadcast programme information;
Figure 2 is a block diagram of a receiving system according to the present invention;
Figure 3 is a flowchart illustrating a method of searching for broadcasting programme information according to the present invention; and
Figures 4A and 4B show screens produced in the method of Figure 3.

Referring to Figure 2, a receiving system includes an antenna 200, a broadcast signal receiver 201, an audio signal processor 202, a video signal processor 203, a detailed information detector 204, a system controller 205, a first storage unit 206, a keyword detector 207, a second storage unit 208, a speaker 209, a display unit 210, a graphics engine 211, and a command applier 212.

The broadcast signal receiver 201, which serves as a tuner, is controlled by the system controller 205 and receives a broadcasting signal in the presently tuned channel from among the broadcast signals received via the antenna 200. The received broadcast signal includes broadcast programmes and the detailed information associated with the broadcast programmes. For example, the detailed information may be like the above-described EPG. The broadcast signal receiver 201 transmits the audio signal included in the received broadcast signal to the audio signal processor 202 and the video signal included in the received broadcast signal to the video signal processor 203.

The audio signal processor 202 is the same as the audio signal processing circuit in a conventional receiving system. If the receiving system is a digital TV or a set top box digital TV adapter, the audio signal processor 202 decodes the received audio signal and converts the decoded audio signal into analogue audio signal. The analogue audio signal output from the audio signal processor 202 is fed to the speaker 209 to make it perceivable to a viewer.

The video signal processor 203 processes the video signal received from the broadcasting signal receiver 201 so that it can be displayed by the display unit 210. If the receiving system is a digital TV or a set top box digital TV adapter, the video signal processor 203 decodes the received video signal and RGB-encodes the decoded video signal for driving the display unit 210.

The video signal processor 203 can insert image data, which includes information such as detailed programme information from the graphics engine 211, into a received video signal and transmits the video signal with the inserted image data to the display unit 210. The image data can be displayed either over the entire screen of the display unit 210 or on part of the screen of the display unit 210.

The detailed information detector 204 detects detailed information in the video signal received from the broadcasting signal receiver 201. Since the detailed information is transmitted in a particular part of an video signal packet, the detailed information can be obtained by decoding the information included in that part. The detailed information is detailed information regarding the receivable broadcast programmes. In the case of terrestrial receiving systems, the detailed information corresponds to an EPG. The detected detailed information is transmitted to the first storage unit 206 and the keyword detector 207.

The first storage unit 206 stores the received detailed information and is used when the system controller 205 tries to search the detailed information for a desired programme using a keyword selected in a way described below, a text keyword search mode or a category search mode. The detailed information related to the desired broadcasting programme found by the system controller 205 is output to the graphics engine 211 for displaying the search result to the user.
The keyword detector 207 identifies keywords in the detailed information received according to a predetermined standard. If the predetermined standard defines that proper nouns are to be identified in the detailed information, the keyword detector 207 identifies as keywords any proper nouns in the received detailed information. For example, proper nouns can be programme tides or leading actors' names. Such detected keywords are stored in the second storage unit 208.

If the system controller 205 requests the second storage unit 208 to output stored keywords, the second storage unit 208 outputs all of the stored keywords to the graphics engine 211. The keywords stored in the second storage unit 208 can be periodically updated by the system controller 205 or updated at any time in consideration of the received detailed information.
The graphics engine 211 receives the detailed information related to broadcasting programmes from the first storage unit 205 and the keywords from the second storage unit 208. Thereafter, controlled by the system controller 205, the graphics engine 211 transforms the received information and keywords into analog image data that can be displayed on the display unit 210. Accordingly, the analog image data can be immediately inserted into the video signal in the video signal processor 203.

As well as inputting a command requesting a search according to the present invention, data and commands necessary for performing conventional text keyword searches, and data and commands necessary to perform conventional category searches, the command applier 212 can input data and commands necessary to control the other functions of the receiving system.

Depending on the information received from the command applier 212, the system controller 205 controls the receiving system so that the first storage unit 206 is searched for detailed information relating to a desired broadcasting programme using the keywords stored in the second storage unit 208; a text input keyword search mode as described above with reference to Figures 1A and 1B, or a category search mode as described above with reference to Figures 1C and 1B. The system controller 205 also controls the second storage unit 208 and the graphics engine 211 so that an image composed of the keywords stored in the second storage unit 208 is displayed on the display unit 210 and controls the first storage unit 206 and the graphics engine 211 so that the detected detailed information relating to the desired broadcasting programme is displayed on the display unit 210

The method of operation of the apparatus of Figure 2 will now be described.

Referring to Figures 2 and 3, in step 301, a broadcast signal is received via the antenna 200.

In step 302, detailed information is decoded from the received broadcast signal. In step 303, the detected detailed information is stored in the first storage unit 206.

In step 304, keywords are identified in the detected detailed information as described above. That is, all proper nouns are identified as keywords in the detected detailed information. In step 305, the detected keywords are stored in the second storage unit 208.

In step 306, it is determined whether there is a request pending for a search of the broadcast programme information. If it is determined in step 306 that an information search is requested, it is determined whether a search mode using given keywords, stored in the second storage unit 208, is requested, in step 307. The search mode using given keywords is a search mode according to the present invention. The given keywords denote keywords that the receiving system provides to the user who wants to search information relating to broadcast programmes.

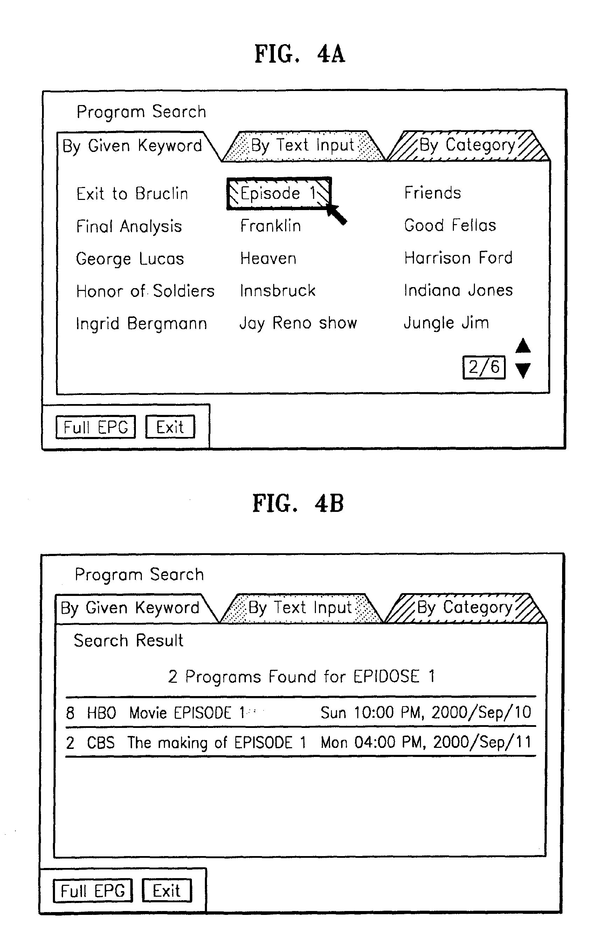

If it is determined in step 307 that the user has requested the search mode using given keywords, all of the keywords stored in the second storage unit 208 are transmitted to the graphics engine 211, and the graphic engine 211 produces image data representing the keywords, in step 308. The produced image data is inserted into the original image in the video signal processor 203, and the resultant image is displayed on the display unit 210. An example of a screen composed of keywords displayed on the display unit 210 is shown in Figure 4A. Figure 4A shows a screen composed of keywords consisting of proper nouns. The screen of Figure 4A can be displayed over the entire screen of the display unit 210 or on a portion of the screen of the display unit 210.

In step 309, it is determined whether a keyword has been selected from the keyword screen shown in Figure 4A. If it is determined in step 309 that a keyword has been selected, the system controller 205 searches for detailed information relating to broadcasting programmes in the first storage unit 206 using the selected keyword, in step 310. The search can be implemented so that all of the detailed information relating to broadcasting programmes that include the selected keyword is searched. The located detailed information relating to broadcast programmes is transmitted to the graphics engine 211 from the first storage unit 206. Thereafter, as shown in Figure 4B, the results of the search for the detailed information relating to broadcast programmes are displayed on the display unit 210. The screen of Figure 4B shows detailed information relating to two broadcasting programmes found based on a keyword "Episode 1" selected in Figure 4A.

If a programme, which it is desired to tuned to, is selected from the displayed search results in step 311, a programme provision routine is performed. However, if a programme is not selected from the displayed search results in step 311, the method goes back to step 306.
Also, if it is determined in step 307 that the search mode using given keywords is not selected, the method goes back to step 306.

In step 313, it is determined whether a search based on input text has been requested. If it is determined in step 313 that the search mode based on input text has been requested, text (a keyword) input screen as shown in Figure 1A is provided, or a screen (not shown) where only a keyword can be input is provided, in step 314.

If it is determined in step 315 that text (a keyword) is input, the method goes back to step 310, in which the detailed information relating to broadcast programmes is searched based on the input keyword, and the search results are displayed as shown in Figure 1C. Input of the text information is achieved via the command applier 212. The command applier 212 may be a remote controller or a wireless keyboard.

If it is determined in step 313 that the search mode based on text input has not been requested, the method goes back to step 306.

In step 316, it is determined whether the category search mode is requested. If it is determined in step 316 that the category search mode has been requested, a category information screen as shown in Figure 1C is provided on the display unit 210, in step 317. To be more specific, the system controller 205 provides prestored category information to the graphics engine 211. The graphics engine 211 processes the category information so that the category information is displayed on the display unit 210. Alternatively, the category information can be stored in a storage unit (not shown) installed outside the system control unit 205.

In step 318, it is determined whether a category has been selected from the category information screen as shown in Figure 1C. If it is determined in step 318 that a category has been selected, the method proceeds to step 310, in which the system controller 205 searches for detailed information relating to the broadcasting programmes that belong to the selected category from the first storage unit 206. The search results are output in the same manner as in the other search modes.

If it is determined in step 316 that the category search mode has not been requested, the method is concluded. However, the method may go back to step 301.

The aforementioned determinations in Figure 3 are performed in the system controller 205 since the system controller 205 receives the information necessary for the determinations via the command applier 212. In Figure 3, steps 306, 307, 313, and 316 are described separately for the sake of convenience. However, they can be implemented in one step of determining which search mode a user has requested. Accordingly, if the user requests a search mode using given keywords, step 306 goes directly to step 308. If the user requests a search mode based on text input, step 306 goes directly to step 314. If the user requests a category search mode, step 306 goes directly to step 317.

As described above, information, such as proper nouns included in detailed information relating to provided broadcast programmes, is identified as keywords, and a user uses the identified keywords in order to search for information relating to a desired broadcast programme. Accordingly, the situation where no results are found is prevented. Also, even when a user does not know nor can determine a proper keyword in advance, information relating to a desired broadcasting programme can be searched easily.

In addition, since a user has only to select a keyword in order to search for information relating to the desired broadcasting programme, an information search according to the present invention is simple compared to existing searching methods.
Furthermore, any of an existing search mode based on text input, a search mode based on category selection, and a search mode according to the present invention can be selected by a user to search for information regarding a desired broadcast programme.

## Claims

1. A television receiving apparatus for receiving a television signal including programme information, the apparatus comprising:
first memory means (206) for storing received programme information;
user input means (212); and
processing means (205) for performing keyword searches of the programme information stored in the first memory means in dependence on operation of the user input means,
**characterised by**
second memory means (208);
keyword extraction means (207) for extracting keywords from received programme information and storing the extracted keywords in the second memory means (208); and
the processing means (205) being responsive to operation of the user input means (212) to cause keywords stored in the second memory means (208) to be displayed and responsive to further operation of the user input means (212), in respect of displayed keywords, to conduct a search of the programme information stored in the first memory means (206) in dependence on a displayed keyword selected by said further operation of the user input means (212).

2. A method of searching for information relating to broadcasting programs, the method comprising:
detecting at least one keyword for each of the broadcasting programs from received detailed information relating to the broadcasting programs; and
searching for a broadcasting program desired by a user using the detected keyword.

3. The method of claim 2, wherein the keywords are proper nouns.

4. The method of claim 2, wherein in the keyword detection step, all of information corresponding to proper nouns are detected as keywords from the detailed information relating to broadcasting programs.

5. The method of claim 2, wherein the searching step comprises:
displaying a screen composed of the keywords if the user requests a search for information relating to a broadcasting program; and
searching for the detailed information relating to the desired broadcasting program using a keyword selected from the displayed keywords.

6. The method of claim 2, wherein the keyword detection step further comprises:
storing the received detailed information; and
storing the detected keywords.

7. A method of searching for information relating to broadcasting programs, the method comprising:
receiving and storing detailed information relating to the broadcasting programs;
detecting at least one keyword for each of the broadcasting programs from received detailed information and storing the detected keywords;
searching for the detailed information relating to a broadcasting program desired by a user, according to a search mode requested by the user among a search mode using the detected keywords, a search mode based on text input, and a search mode based on category selection; and
displaying the searched information relating to broadcasting programs.

8. The method of claim 7, wherein the keywords are proper nouns.

9. The method of claim 7, wherein if the user requests a search mode using the keywords, the searching step comprises:
displaying all of the stored keywords; and
searching for the detailed information relating to the desired broadcasting
program using a keyword selected from the displayed keywords.

10. An apparatus for searching for information relating to broadcasting programs, the apparatus comprising:
a detailed information detector detecting detailed information relating to the broadcasting programs from a received broadcasting signal;
a keyword detector detecting at least one keyword from the detailed information received from the detailed information detector;
a system controller controlling the keyword detector to output detected keywords if a user requests a search for a broadcasting program, displaying the keyword output from the keyword controller, and if a keyword is selected from the displayed keywords, displaying the detailed information relating to broadcasting programs including the selected keyword;
a graphics engine controlled by the system controller to transform the detected keywords and the detected detailed information into information that can be displayed; and
a display unit displaying the keywords and detailed information provided by the graphics engine.

11. The apparatus of claim 10, further comprising:
a first storage unit storing the detailed information; and
a second storage unit storing the keywords.

12. The apparatus of claim 10, wherein the keywords are proper nouns.

13. The apparatus of claim 10, wherein the keyword detector detects as the keywords information corresponding to proper nouns from the detailed information.

14. An apparatus for searching for information relating to broadcasting programs, the apparatus comprising:
a detailed information detector detecting detailed information relating to the broadcasting programs from a received broadcasting signal;
a keyword detector detecting at least one keyword from the detailed information received from the detailed information detector;
a system controller controlling the apparatus so that information relating to a broadcasting program desired by a user is searched from the detailed information according to a search mode requested by the user among a search mode using the detected keywords, a search mode based on text input, and a search mode based on category selection;
a graphics engine controlled by the system controller so that image data for the search mode using keywords, image data for the search mode based on text input, image data for the category search mode, and image data relating to searching results are each transformed into data that can be displayed; and
a display unit displaying the image data provided by the graphics engine.
